(19) Europäisches Patentamt European Patent Office Office européen des brevets

(11) **EP 1 814 822 B1**

(12) **EUROPEAN PATENT SPECIFICATION**

(45) Date of publication and mention of the grant of the patent:
**16.04.2008 Bulletin 2008/16**

(21) Application number: **05808129.0**

(22) Date of filing: **17.11.2005**

(51) Int Cl.:
**C01B 33/44** *(2006.01)*     **C01B 33/40** *(2006.01)*

(86) International application number:
**PCT/EP2005/056041**

(87) International publication number:
**WO 2006/058846 (08.06.2006 Gazette 2006/23)**

(54) **CLAY COMPRISING CHARGE-BALANCING ORGANIC IONS AND NANOCOMPOSITE MATERIALS COMPRISING THE SAME**

TON MIT LADUNGSAUSGLEICHENDEN ORGANISCHEN IONEN UND DAMIT VERSEHENE NANOVERBUNDWERKSTOFFE

ARGILE COMPRENANT DES IONS ORGANIQUES À ÉQUILIBRAGE DE CHARGE ET DES MATÉRIAUX NANOCOMPOSITES LES COMPRENANT

(84) Designated Contracting States:
**AT BE BG CH CY CZ DE DK EE ES FI FR GB GR HU IE IS IT LI LT LU LV MC NL PL PT RO SE SI SK TR**

(30) Priority: **01.12.2004 EP 04078268**
**10.01.2005 US 642099 P**
**28.06.2005 EP 05105739**

(43) Date of publication of application:
**08.08.2007 Bulletin 2007/32**

(73) Proprietor: **Akzo Nobel N.V.**
**6824 BM Arnhem (NL)**

(72) Inventors:
• **WINTERS, Robin**
**NL-6681 EM Bemmel (NL)**

• **DE VOS, Siebe Cornelis**
**NL-6836 PW Arnhem (NL)**
• **SCHOMAKER, Elwin**
**NL-6828 EH Arnhem (NL)**

(74) Representative: **Schalkwijk, Pieter Cornelis et al**
**Akzo Nobel N.V.**
**Intellectual Property Department (AIP)**
**P.O. Box 9300**
**6800 SB Arnhem (NL)**

(56) References cited:
EP-A- 1 026 702          WO-A-02/06388
WO-A-99/35185           US-A1- 2003 060 555
US-B1- 6 242 500

**Description**

The invention relates to clays comprising charge-balancing organic ions and their use. The invention further relates to hybrid organic-inorganic composite materials comprising these clays and their use.

Clays with charge-balancing ions are known in the art. For example, WO 99/35186 discloses nanocomposite materials comprising a polymeric matrix and a layered double hydroxide (LDH), wherein the LDH is modified with anions such as carboxylic acids, sulfonic acids, phosphonic acids, and sulfate acids that contain an alkyl or an alkyl phenyl group having 6 to 22 carbon atoms.

WO 00/09599 describes composite materials comprising a polymeric matrix and an LDH. The LDH for example is a hydrotalcite with ions selected from unsubstituted or substituted aliphatic or aromatic carboxylic acid or alkali salts thereof. WO 00/09599 specifically mentions monocarboxylic acids having 6 to 35 carbon atoms, as well as dicarboxylic acids, and esters thereof.

EP 0 780 340 discloses intercalated layered materials, such as a smectite clay mineral, wherein the intercalating ion is a monomeric organic compound that includes a functionality selected from the group consisting of hydroxyl, polyhydroxyl, carbonyl, carboxylic acid, amine, amide, ether, ester, phenyl, and mixtures thereof. Many examples of these monomeric organic compounds are given. EP 0 780 340 also describes that these intercalated layered materials can be used in nanocomposite materials.

It is an objective of the present invention to provide a novel class of clays comprising charge-balancing organic ions and hybrid organic-inorganic composite materials comprising these clays.

This objective is achieved with clays selected from anionic clays, smectite-type clays, and vermiculite that comprise charge-balancing organic ions of which at least a part is rosin-based.

Clays treated with charge-balancing organic ions are commonly referred to as "organoclays". The clay according to the present invention is therefore also referred to as an organoclay.

The organoclay of the present invention is organophilic and compatible with organic materials, which renders it suitable for applications where the clay is to be dispersed in an organic medium so as to obtain hybrid organic-inorganic composite materials. According to the present invention, at least part of the organic ions is rosin-based. The chemical and physical properties of rosin render the organoclay of the invention suitable for use in a wide variety of applications and in a wide variety of organic media, e.g. polymers. In contrast, conventional organoclays generally are suitable for a more limited variety of applications and/or organic media. A further advantage of rosin is that it is cheap, readily available, and easily modified.

In the context of the present application the term "charge-balancing organic ion" refers to organic ions that compensate for the electrostatic charge deficiencies of the crystalline clay sheets. As the clay typically has a layered structure, the charge-balancing organic ions may be situated in the interlayer, on the edge or on the outer surface of the stacked clay layers. Such organic ions situated in the interlayer of stacked clay layers are referred to as intercalating ions.

Such a stacked clay or organoclay may also be delaminated or exfoliated, e.g. in a polymer matrix. Within the context of the present specification, the term "delamination" is defined as reduction of the mean stacking degree of the clay particles by at least partial de-layering of the clay structure, thereby yielding a material containing significantly more individual clay sheets per volume. The term "exfoliation" is defined as complete delamination, i.e. disappearance of periodicity in the direction perpendicular to the clay sheets, leading to a random dispersion of individual layers in a medium, thereby leaving no stacking order at all.

Swelling or expansion of the clays, also called intercalation of the clays, can be observed with X-ray diffraction (XRD), because the position of the basal reflections - i.e. the d(*00l*) reflections - is indicative of the distance between the layers, which distance increases upon intercalation.

Reduction of the mean stacking degree can be observed as broadening, up to disappearance, of the XRD reflections or by an increasing asymmetry of the basal reflections (00*l*).

Characterization of complete delamination, i.e. exfoliation, remains an analytical challenge, but may in general be concluded from the complete disappearance of non-(*hk0*) reflections from the original clay.

The ordering of the layers and, hence, the extent of delamination, can further be visualized with transmission electron microscopy (TEM).

The clay according to the invention can be anionic or - in the case of smectite-type clays and vermiculite - cationic. Anionic clays are clays that have anionic charge-balancing ions; cationic clays are clays that have cationic charge-balancing ions.

In the present invention anionic clays are the most preferred types of clays.

Examples of smectite-type clays are montmorillonite, beidellite, nontronite, hectorite, saponite, and sauconite. These smectites, and processes for their preparation, are described in US 4,695,402, US 3,855,147, US 3,852,405, US 3,844,979, US 3,844,978, US 3,671,190, US 3,666,407, US 3,586,478, and US 3,252,757. Preferred smectites are montmorillonite, hectorite, and saponite. The most preferred smectite is montmorillonite.

Compared to other cationic clays, such as kaolinite, halloysite, illite, and chlorite, smectite-type clays and vermiculite have a higher cation exchange capacity. Preferably, the smectite-type clay has a cation exchange capacity in the range of 50-200 meq/100 g. This cation exchange capacity is easily determined by generally known methods.

The distance between the individual clay layers in a cationic clay-based organoclay generally is larger than the distance between the layers of the original cationic clay that did not contain rosin-based ions. Preferably, the distance between the layers in a cationic clay according to the invention is at least 1.0 nm, more preferably at least 1.5 nm, and most preferably at least 2 nm. The distance between the individual layers can be determined using X-ray diffraction, as outlined before.

Anionic clays are clays comprising anionic charge-balancing ions and a layered structure corresponding to the general formula:

$$\left[ M_m^{2+} M_n^{3+}(OH)_{2m+2n} \right] X_{n/z}^{z-} \cdot bH_2O \qquad \text{(I)}$$

wherein $M^{2+}$ is a divalent metal ion such as $Zn^{2+}$, $Mn^{2+}$, $Ni^{2+}$, $Co^{2+}$, $Fe^{2+}$, $Mg^{2+}$, $M^{3+}$ is a trivalent metal ion such as $Al^{3+}$, $Cr^{3+}$, $Fe^{3+}$, $Co^{3+}$, and $Ga^{3+}$, m and n have a value such that m/n = 1 to 10, and b has a value in the range of from 0 to 10. X is a charge-balancing ion and may be hydroxide, carbonate, bicarbonate, nitrate, chloride, bromide, sulfonate, sulfate, bisulfate, vanadates, tungstates, borates, phosphates, pillaring anions such as $HVO_4^-$, $V_2O_7^{4-}$, $HV_2O_{12}^{4-}$, $V_3O_9^{3-}$, $V_{10}O_{28}^{6-}$, $Mo_7O_{24}^{6-}$, $PW_{12}O_{40}^{3-}$, $B(OH)_4^-$, $B_4O_5(OH)_4^{2-}$, $[B_3O_3(OH)_4]^-$, $[B_3O_3(OH)_5]^{2-}$ $HBO_4^{2-}$, $HGaO_3^{2-}$, $CrO_4^{2-}$, and Keggin-ions. Preferred inorganic anionic clays contain carbonate, nitrate, sulfate and/or hydroxide in the interlayer, because these are the most readily available and least expensive inorganic anionic clays. For the purpose of this specification, carbonate and bicarbonate anions are defined as being of inorganic nature. Anionic clay-based organoclays according to the invention are anionic clays as defined above wherein at least part of the charge-balancing ions are rosin-based ions.

The term "anionic clay" includes hydrotalcite and hydrotalcite-like anionic clays, also called layered double hydroxides (LDH). Examples of hydrotalcite-like materials are meixnerite, manasseite, pyroaurite, sjögrenite, stichtite, barberonite, takovite, reevesite, and desautelsite. Preferred are anionic clays having a layered structure corresponding to the general formula:

$$\left[ Mg_m^{2+} Al_n^{3+}(OH)_{2m+2n} \right] X_{n/z}^{z-} \cdot bH_2O \qquad \text{(II)}$$

wherein m and n have a value such that m/n = 1 to 10, preferably 1 to 6, more preferably 2 to 4, and most preferably a value close to 3; b has a value in the range of from 0 to 10, generally a value of 2 to 6, and often a value of about 4. X is a charge-balancing ion and may be hydroxide, carbonate, bicarbonate, nitrate, chloride, bromide, sulfonate, sulfate, bisulfate, vanadates, tungstates, borates, phosphates, pillaring anions such as $HVO_4^-$, $V_2O_7^{4-}$, $HV_2O_{12}^{4-}$, $V_3O_9^{3-}$, $V_{10}O_{28}^{6-}$, $Mo_7O_{24}^{6-}$, $PW_{12}O_{40}^{3-}$, $B(OH)_4^-$, $B_4O_5(OH)_4^{2-}$, $[B_3O_3(OH)_4]^-$, $[B_3O_3(OH)_5]^{2-}$ $HBO_4^{2-}$, $HGaO_3^{2-}$, $CrO_4^{2-}$, and Keggin-ions.

The anionic clay may have any crystal form known in the art, such as described by Cavani et al. (Catalysis Today, 11 (1991), pp.173-301) or by Bookin et al. (Clays and Clay Minerals, (1993), Vol. 41(5), pp.558-564), such as $3H_1$, $3H_2$, $3R_1$, or $3R_2$ stacking.

The distance between the individual clay layers in the anionic clay-based organoclay generally is larger than the distance between the layers of the original anionic clay that did not contain rosin-based ions. Preferably, the distance between the layers in an anionic clay-based organoclay according to the invention is at least 1.0 nm, more preferably at least 1.5 nm, and most preferably at least 2 nm. The distance between the individual layers can be determined using X-ray diffraction, as outlined before.

At least part of the charge-balancing organic ion in the organoclay according to the invention is rosin-based. Rosin is derived from natural sources, is readily available, and is relatively cheap compared to synthetic organic anions. Typical examples of natural sources of rosin are gum rosin, wood rosin, and tall oil rosins. Rosin commonly is a mixture of a wide variety of different isomers of monocarboxylic tricyclic rosin acids usually containing about 20 carbon atoms. The tricyclic structures of the various rosin acids differ mainly in the position of the double bonds. Typically, rosin is a mixture of substances comprising levopimaric acid, neoabietic acid, palustric acid, abietic acid, dehydroabietic acid, seco-dehydroabietic acid, tetrahydroabietic acid, dihydroabietic acid, pimaric acid, and isopimaric acid. Rosin derived from natural sources also includes rosins, i.e. rosin mixtures, modified notably by polymerization, isomerization, disproportionation, hydrogenation, and Diets-Alder reactions with acrylic acid, anhydrides, and acrylic acid esters. The products obtained by these processes are referred to as modified rosins. Natural rosin may also be chemically altered by any process known in the art, such as for example reaction of the carboxyl group on the rosin with metal oxides, metal hydroxides or salts to form rosin soaps or salts (so-called resinates). Such chemically altered rosins are referred to as rosin derivatives.

Rosins can be modified or chemically altered by introducing an organic group, an anionic group or a cationic group. The organic group may be a substituted or unsubstituted aliphatic or aromatic hydrocarbon having 1 to 40 carbon atoms. The anionic group may be any anionic group known to the man skilled in the art, such as a carboxylate or a sulfonate. The cationic group may be an "onium" group such as a sulfonium, phosphonium, and quaternary ammonium group, where the "onium" group is attached directly to the rosin or is attached to the rosin via a substituted or unsubstituted aliphatic or aromatic hydrocarbon having 1 to 40 carbon atoms. Preferably, the onium group is a quaternary ammonium group. Rosins comprising a quaternary ammonium group are particularly suitable as charge-balancing organic ions in cationic clays. Suitable examples of such rosins can be found in an article by Wang Hengshan, Tang Lidong, Pan Yingming, Liang Min ( "Synthesis of Novel Chiral Quaternary Ammonium Salt from Rosin" in Chemical Journal on Internet, August 1, 2004, Vol. 6, No. 8, P.56.), in US 2,510,295, US 2,686,776, and US 2,623,870. However, it is less preferred that aliphatic mono-, di- and polyamines derived from rosin acids are present in cationic clay-based organoclays because of their price, low commercial availability, relatively low purity and, therefore, the relatively low functionality of such rosin-based materials.

Further details of these rosin-based materials can be gleaned from D.F. Zinkel and J. Russell (in Naval Stores, production-chemistry-utilization, 1989, New York, Section II, Chapter 9), and J.B. Class ("Resins, Natural," Chapter 1: "Rosin and Modified Rosins," Kirk-Othmer Encyclopedia of Chemical Technology, online posting date: December 4, 2000).

In this specification, the term "rosin-based ions" refers to any of the above-mentioned types of rosins, modified rosins, and rosin derivatives.

It is also contemplated to use one or more organic ions different from the rosin-based ion. These organic ions may change the physical and chemical properties of the clay as desired. The organic ion different from the rosin-based ion may be any organic anion known in the art, such as described in EP 0 780 340 and WO 00/09599. Preferably, the organic anion may be an anion selected from the group consisting of carboxylic acids, sulfonic acids, phosphonic acids, and sulfate acids which contain an alkyl or an alkyl phenyl group having 6 to 35 carbon atoms. Particularly preferred organic anions are fatty acids having from 8 to 22 carbon atoms. Suitable examples of such fatty acids are caprylic acid, capric acid, lauric acid, myristic acid, palmitic acid, stearic acid, arachidic acid, decenoic acid, palmitoleic acid, oleic acid, linoleic acid, linolenic acid, and mixtures thereof. It is noted that clays, and in particular anionic clays, comprising rosin-based and fatty acid-based charge-balancing ions are suitably used in hybrid organic-inorganic composite materials, and in particular in polymer-clay nanocomposite materials. These intercalated clays are preferably used in homo- or copolymers of polyolefins. Particularly preferred polyolefins are polyethylene and polypropylene.

Alternatively or additionally, the organic ion different from the rosin-based ion may be any organic cation known in the art. Preferably, the organic cation is a hydrocarbon comprising a quaternary ammonium group such as those described in EP 0 780 340.

It is noted that the organic anion is preferably used in anionic clays and the organic cation is preferably used in cationic clays.

Generally, at least 10% of the total amount of charge-balancing ions in the organoclay according to the invention are rosin-based ions, preferably at least 30%, more preferably at least 60%, and most preferably at least 90% of the total amount of intercalating ions are rosin-based ions.

The organoclay according to the invention can be prepared in analogous manner to known methods for the preparation of prior art organoclays. Examples of such methods can be found in WO 00/09599 for anion clay-based organoclays and in EP 0 780 340 for cationic clay-based organoclays.

Suitable methods for the preparation of the organoclay according to the invention include:

a. ion-exchange with the rosin-based ion;
b. synthesis of the clay in the presence of the rosin-based ion;
c. calcination of the clay and subsequent rehydration in the presence of the rosin-based ion;
d. exchange of carbonate ions of the clay with a mineral acid and subsequent ion-exchange with the rosin-based ion.

For further methods reference is made to Carlino (Solid State Ionics, 1996, 98, pp. 73-84). In this article, methods such as the thermal or melt reaction method and the glycerol-effected exchange method are described. According to the thermal or melt reaction method, clay and the rosin-based ion are intimately mixed at elevated temperature, preferably at a temperature above the melting temperature of the ion. According to the glycerol-effected exchange method, there is intermediate swelling with glycerol of the clay, after which the rosin-based ion is introduced and subsequent intercalation takes place. It is noted that this method can also be carried out using swelling agents other than glycerol, such as ethanol, 2-propanol, butanol, triethylene glycol, etc.

Alternatively, the organoclay of the invention can be prepared by melt blending rosin and clay.

The organoclay of the invention can be used as a constituent in coating compositions, (printing) ink formulations, adhesive tackifiers, resin-based compositions, rubber compositions, cleaning formulations, drilling fluids and cements, plaster formulations, non-woven fabrics, fibres, foams, membranes, orthoplastic casts, (pre-)ceramic materials, and hybrid organic-inorganic composite materials such as polymer-based nanocomposites. The organoclay of the invention can further be used in polymerization reactions such as solution polymerization, emulsion polymerization, and suspension polymerization. The organoclay may further serve as a crystallization aid in semi-crystalline polymers, such as polypropylene. The organoclay can further be used in applications where the separate functions of the clay and the rosin-based ion may be combined, such as in the paper making process or the detergent industry. Additionally, the organoclay of the invention can be used in controlled release applications for medicines, pesticides, and/or fertilizers, and as sorbent of organic compounds such as pollutants, colourants, etc.

The invention further pertains to hybrid organic-inorganic composite materials comprising a polymer matrix and the organoclay according to the invention. The clay present in the composite material may adsorb additives or by-products of initiators used in the polymerization of the polymer. Compared to organic anions or carions used the art, rosin is cheap, readily available, and easily modified.

Due to the organic nature of the rosin-based ions, the organoclay of the present invention is hydrophobic and generally compatible with and well dispersible in a polymer matrix. The hybrid organic-inorganic composite material may vary as regards the composition and size of its constituents. A preferred example of such a hybrid organic-inorganic composite material is a nanocomposite material. The term "nanocomposite material" refers to a composite material wherein at least one component comprises an inorganic phase with at least one dimension in the 0.1 to 100 nanometer range. One class of polymer-based nanocomposites (PNC) comprises hybrid organic-inorganic materials derived from the incorporation of small quantities of extremely thin nanometer-sized inorganic particles of high aspect ratio into a polymer matrix. The nanocomposite material according to the invention has improved properties such as improved heat stability, better dimensional stability, increased flame resistance, and improved strength-to-weight ratios compared to microcomposite materials comprising conventional mineral fillers. The material furthermore reveals a reduced permeability towards gases and/or liquids, such as oxygen, water vapour, and hydrocarbons.
Under certain conditions, the clay present in the hybrid material may delaminate further within the hybrid material, up to exfoliation of single, modified clay sheets. A homogeneous distribution of well delaminated or even exfoliated clay sheets generally causes the thus obtained nanocomposite material to have improved properties (as indicated above) compared to its analogue, i.e. a microcomposite material comprising unmodified clay having micrometer size.

Specifically suitable for use in the hybrid organic-inorganic composite materials of the present invention are clays comprising charge-balancing rosin-based ions that are chemically altered so as to be more compatible or reactive with the polymer matrix. This results in an improvement of the interaction between the clay and the polymer matrix, resulting in improved mechanical and/or viscoelastic properties. More compatible rosin-based ions may comprise a substituted or unsubstituted aliphatic or aromatic hydrocarbon having 1 to 40 carbon atoms. Alternatively or additionally, the rosin-based ion may comprise a reactive group selected from the group consisting of hydroxy, amino, ammonium, nitro, sulfonic, sulfinic, sulfonate, sulfonium, phosphonate, phosphonium, epoxy, vinyl, isocyanate, carboxy, carboxylic acid, hydroxyphenyl, and anhydride.
It is also contemplated to use one or more charge-balancing organic ions different from the rosin-based ion. The organic ion may also serve to change the physical and chemical properties of the nanocomposite material as desired.

Such organic ions may be compatible or reactive with the polymer matrix. The second charge-balancing organic ion may be any organic ion known in the art. Preferably, the second ion can be selected from anions of carboxylic acids, sulfonic acids, phosphonic acids, and sulfate acids which contain an alkyl or an alkyl phenyl group having 6 to 35 carbon atoms.

The polymer for forming the hybrid organic-inorganic composite material can be any polymer matrix known in the art. In this specification, the term "polymer" refers to an organic substance of at least two building blocks (i.e. monomers), thus including oligomers, copolymers, and polymeric resins. Suitable polymers for use in the polymer matrix are both poly-adducts and polycondensates. The polymers may further be homopolymers or copolymers.
Preferably, the polymeric matrix has a degree of polymerization of at least 20, more preferably of at least 50. In this connection, for a definition of the degree of polymerization, reference is made to P.J. Flory, Principles of Polymer Chemistry, New York, 1953.
Examples of suitable polymers are polyolefins, such as polyethylene or polypropylene, vinyl polymers, such as polystyrene, polymethyl methacrylate, polyvinyl chloride, polyvinylidene chloride or polyvinylidene fluoride, saturated polyesters, such as polyethylene terephthalate, polylactic acid, or poly($\varepsilon$-caprolactone), unsaturated polyester resins, acrylate resins, methacrylate resins, polyimides, epoxy resins, fenol formaldehyde resins, urea formaldehyde resins, melamine formaldehyde resins, polyurethanes, polycarbonates, polyaryl ethers, polysulfones, polysulfides, polyamides, polyether imides, polyether esters, polyether ketones, polyether ester ketones, polysiloxanes, polyurethanes, polyepoxides, and blends of two or more polymers. Preferably used are polyolefins, vinyl polymers, polyesters, polycarbonates, polyamides, polyurethanes or polyepoxides.

The organoclay according to the invention is particularly suitable for use in thermoplastic polymers such as polyethylene, polypropylene, polystyrene and acetal (co)polymers such as polyoxymethylene (POM), and in rubbers such as natural rubber (NR), styrene-butadiene rubber (SBR) polyisoprene (IR), polybutadiene (BR), polyisobutylene (IIR), halogenated polyisobutylene, butadiene nitrile rubber (NBR), hydrogenated butadiene nitril (HNBR), styreneisoprene-styrene (SIS) and similar styrenic block copolymers, poly(epichlorohydrin) rubbers (CO, ECO, GPO), silicon rubbers (Q), chloroprene rubber (CR), ethylene propylene rubber (EPM), ethylene propylene diene rubber (EPDM), polysulfide rubber (T), fluorine rubbers (FKM), ethene-vinylacetate rubber (EVA), polyacrylic rubbers (ACM), polynorbornene (PNR), polyurethanes (AU/EU), and polyester/ether thermoplastic elastomers.

Particularly preferred are polymers or copolymers obtainable by polymerization of at least one ethylenically unsaturated monomer. Examples of such polymers are polyolefins and modified polyolefins, which are known to the man skilled in the art. The polyolefin or modified polyolefin can be a homopolymer or a copolymer. Suitable examples of such (modified) polyolefins are polyethylene, polypropylene, polybutylene, polystyrene, polyvinyl chloride, polyvinylidene chloride, and ethylene-propylene rubber, propylene-butene copolymer, ethylene-vinyl chloride copolymer, ethylene-vinyl acetate copolymer, acrylonitrile-butadiene-styrene copolymer (ABS), acrylonitrile-acrylate-styrene copolymer (AAS), methyl methacrylate-butadiene-styrene copolymer (MBS), chlorinated polyethylene, chlorinated polypropylene, ethylene-acrylate copolymer, vinyl chloride-propylene copolymer, and mixtures thereof. Even more preferred polymers are polyethylene, polypropylene, polystyrene, and polyvinyl chloride.

Specific examples of polyethylene are high-density polyethylene, low-density polyethylene, straight chain low-density polyethylene, ultra-low-density polyethytlene, and ultra-high-molecular weight polyethylene. Examples of ethylene-based copolymers are ethylene-vinyl acetate copolymer (EVA), ethylene-ethyl acrylate copolymer (EEA), ethylene-methyl acrylate copolymer (EMA), and ethylene-acrylic acid copolymer (EAA).

The most preferred polymer is polypropylene. Any polypropylene known in the art will be suitable for use in the present invention. Examples of polypropylenes are given in "Polypropylene", Chapter 1: "Properties", by R.B. Lieberman in Kirk-Othmer Encyclopedia of Chemical Technology, online posting date December 4, 2000. A particular and preferred class of polypropylenes of the invention is formed by the so-called thermoplastic polyolefins (TPO), which include blends or reactor grades of polypropylene and EPR rubber.

If the hybrid organic-inorganic composite material comprises a rubber matrix and the organoclay of the invention, the toughness of the material is improved compared to neat rubber material that does not comprise the organoclay of the invention. In addition, the hybrid organic-inorganic composite material exhibits a lower tan delta at elevated temperatures during dynamic deformation at constant force, thus showing improved elastic properties, which generally causes tyres comprising the rubber material to have a lower rolling resistance. The term "tan delta" is known to a skilled person, and is defined as the ratio of the loss modulus (G') to the storage modulus (G").

The hybrid organic-inorganic composite material of the invention may further comprise additives commonly used in the art. Examples of such additives are pigments, dyes, UV-stabilizers, heat-stabilizers, anti-oxidants, fillers (such as hydroxyapatite, silica, carbon black, glass fibres, and other inorganic materials), flame retardants, nucleating agents, impact modifiers, plasticisers, rheology modifiers, cross-linking agents, and degassing agents.

These optional addenda and their corresponding amounts can be chosen according to need.

The amount of organoclay in the hybrid organic-inorganic composite material preferably is 0.01-75 wt%, more preferably 0.05-50 wt%, even more preferably 0.1-30 wt%, based on the total weight of the mixture.

Clay amounts of 10 wt% or less, preferably 1-10 wt%, more preferably 1-5 wt%, are especially advantageous for the preparation of polymer-based nanocomposites, i.e. polymer-containing compositions according to the invention that contain delaminated - up to exfoliated - rosin-based organoclays.

Clay amounts of 10-70 wt%, more preferably 10-50 wt%, are especially advantageous for the preparation of so-called masterbatches, i.e. highly concentrated additive premixes for, e.g., polymer compounding. Although the clay in such masterbatches in general is not completely delaminated, further delamination may be reached at a later stage, if so desired, when blending the masterbatch with a further polymer to obtain true polymer-based nanocomposites.

The hybrid organic-inorganic composite material of the present invention can be prepared according to any method known to a person skilled in the art. A skilled person may intimately mix a polymer matrix and the organoclay according to the invention by using melt-blending techniques, for instance. This method is preferred, as it is simple, cost-effective, and readily applicable in existing plants. It is also envisaged to prepare the clay of the invention in the presence of the polymer matrix, or in the presence of the monomers and/or oligomers before, while or after the monomers and/or oligomers are polymerized to form the polymer matrix. Further details of the preparation and processing of polypropylene can be found in "Polypropylene", Chapter 2: "Manufacture", and Chapter 3: "Processing", by R.B. Lieberman in Kirk-Othmer Encyclopedia of Chemical Technology, online posting date December 4, 2000.

Masterbatches, i.e. highly concentrated additive premixes, comprising clay amounts of 10-70 wt% can be advantageously used for the preparation of nanocomposite materials by blending the masterbatch with a (further) polymer to obtain true polymer-based nanocomposites.

The hybrid organic-inorganic composite material of the present invention can be used in any application in which these composite materials are conventionally used. The composite material can be suitably used in carpeting, automobile parts, container closures, lunch boxes, closures, medical devices, household articles, food containers, dishwashers, outdoor furniture, blow-moulded bottles, disposable non-woven fabrics, cables and wires, and packaging. Further details for polypropylene can be found in "Polypropylene", Chapter 5: "Uses", by R.B. Lieberman in Kirk-Othmer Encyclopedia of Chemical Technology, online posting date December 4, 2000, and in brochure 022 PPe 10/01 of Basell entitled "Polypropylene: Textile, Rigid Packaging, Consumer, Film, Automotive, Electrical/Electronics and Home Appliances".

The present invention is further illustrated in the Examples below.

DESCRIPTION OF THE FIGURES

**Figure 1** shows the XRD patterns of a commercial Mg-Al anionic clay (carbonate form, line A), an organoclay comprising rosin-based ions as described in Example 1 (line B), an SBR compound containing 85 wt% of SBR and 15 wt% of an anionic clay comprising rosin-based ions (Example 2, line C), and an NR compound containing 85 wt% of NR and 15 wt% of an anionic clay comprising rosin-based ions (Example 3, line D).
**Figure 2** is a TEM image of the SBR rubber-nanocomposite prepared as described in Example 2.
**Figure 3** shows the XRD reflection patterns of a commercial Mg-Al anionic clay (carbonate form, line A), an anionic clay comprising rosin-based ions as described in Example 4 (line B), a PP film containing 88 wt% of PP and 12 wt% of an anionic clay comprising rosin-based ions (Example 5, line C)
**Figure 4** is a TEM image of the PP-nanocomposite prepared as described in Example 5.

EXAMPLES

In the examples below, commercially available, synthetic hydrotalcite-like clays, viz. DHT-6 (CAS No. 11097-59-9) and DHT-4A (CAS No. 11097-59-9), supplied by Kisuma Chemicals BV, a subsidiary of Kyowa Chem. Ind. Co., Japan, were used. These materials were used as received. The Rondis® DRS-S70, a 70% aqueous solution of solid disproportionated rosin sodium soap, was supplied by Ink and Adhesive Resins BV, a company of Akzo-Nobel Chemicals. Pinerez® 9010 is a solid disproportionated rosin, which was supplied by Ink and Adhesive Resins B.V., a company of Akzo-Nobel Chemicals.

Example 1

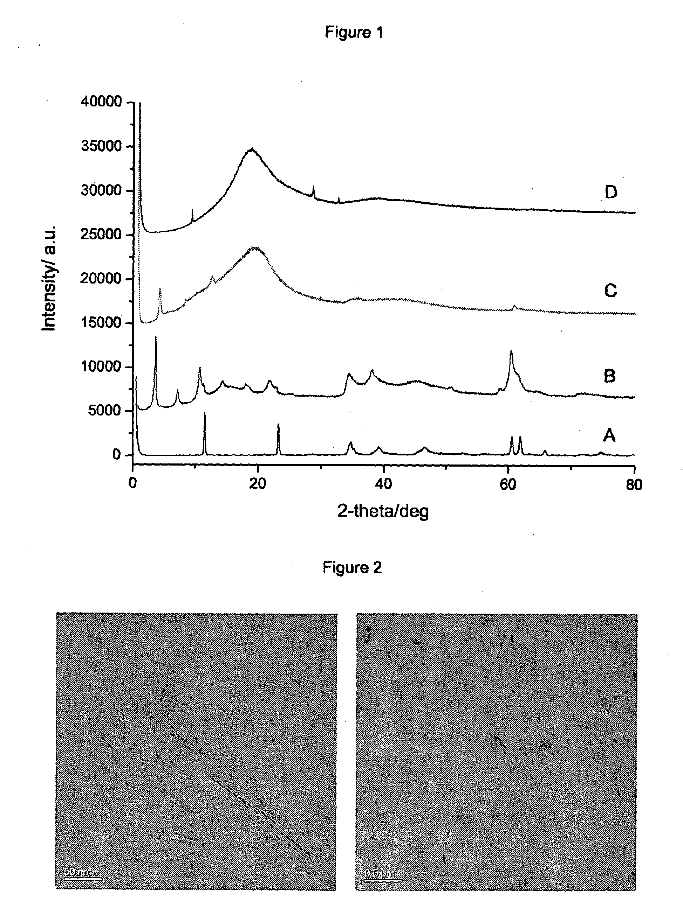

20 grams of hydrotalcite-like clay (DHT-6) were dispersed in 250 ml of deionized water in a 500 ml 4-necked round-bottom flask equipped with a mechanical stirrer, a thermometer/ thermostat, a reflux cooler, and a nitrogen flush.
The mixture was heated to 80°C using an electrical heating mantle. Approximately 40 ml of nitric acid (65%) were slowly added to the mixture using a dripping funnel until a pH of 4 was obtained. Then 200 grams of rosin soap (Rondis® DRS-S70) and approximately 10 grams of NaOH were added until a pH of 8-9 was obtained. The mixture was kept at 80°C overnight while stirring. The precipitated material was separated from the aqueous phase using a centrifuge at 4,000 rpm for 20 minutes. The material was subsequently washed twice with demineralized water and 3 times with ethanol. The resulting material was dried in a vacuum oven at 70°C under reduced pressure for 3 hours. The resulting hydrotalcite-like clay comprising rosin-based ions was analyzed with X-ray diffraction to determine the inter-gallery spacing or d-spacing.
The XRD pattern of the hydrotalcite-like clay comprising disproportionated rosin-based ions (Figure 1, line B) shows minor hydrotalcite-related non-(hk0) reflections, indicating intercalation of the anionic clay. The intercalate exhibits a characteristic d(00I) value of 24 A - which is much larger than the 7.6 A or 8.0 A d-spacing of the original hydrotalcite-like clay and the nitrated hydrotalcite-like clay - and the XRD pattern shows many more higher order reflections.

Example 2

A rubber-based nanocomposite was prepared by melt-mixing the hydrotalcite-like clay comprising rosin-based ions from Example 1 with SBR rubber (Buna SB 1502, DOW Chemical) in a 15/85 weight ratio using a Brabender mixing chamber (30 $cm^3$). Approximately 20 grams of rubber were mixed with 3 grams of intercalated clay at a rotation speed of 50 rpm at a temperature of 110°C for 20 minutes. The nanocomposite was analyzed with XRD and TEM to determine the extent of exfoliation.
The SBR nanocomposite (Figure 1, line C) shows only minor reflections at a d-spacing of 34 Å, which is proof of further swelling of the stacks and even exfoliation of the clay sheets. In addition, the reflection at 24 Å has disappeared, which is additional proof of the disappearance of the regular stacking of the clay sheets. The formation of a nanocomposite material is further confirmed by the TEM images (Figures 2) and by the fact that the rubber mixture obtained became transparent during the mixing process.

Example 3

7.5 grams of the hydrotalcite-like clay obtained in Example 1 were mixed with 42.5 grams of NR (SMR5) in a 50 cm$^3$ mixing chamber. The rotor speed was set at 50 rpm and the mixing time was 20 minutes at 110°C. In a second mixing step, 4 phr (i.e. parts by weight per hundred parts by weight of rubber) of a peroxide, Perkadox® BC-ff (Akzo Nobel Chemicals), were mixed with 100 phr NR containing the intercalated clay on a laboratory two-roll mill for approximately 10 minutes. Subsequently, the material was vulcanized at 170°C in a heated hydraulic press (Fontijne). The vulcanized nanocomposites were also analyzed with XRD.

The NR nanocomposite (Figure 1, line D) only exhibits the broad NR signal and some small signals assigned to peroxide degradation products left in the sample. All the signals of the rosin intercalate have disappeared, indicating complete exfoliation of the modified hydrotalcite sheets and illustrating the clear benefit of using rosin as an intercalating species.

Example 4

100 grams of hydrotalcite-like clay (DHT-4A) were dispersed in 1,000 ml of deionized water and 400 ml of ethanol in a 3,000 ml 4-necked round-bottom flask equipped with a mechanical stirrer, a thermometer/thermostat, a reflux cooler, and a nitrogen flush.

The mixture was heated to 75°C using an electrical heating mantle. Approximately 90 ml of nitric acid (65%) were slowly added to the mixture from a dropping funnel until a pH of 4 was obtained. Then slowly 200 grams of disproportionated rosin (Pinerez® 9010) and approximately 25 grams of NaOH were added until a pH of 8-9 was obtained. The mixture was kept at 75°C overnight while stirring. The precipitated material was separated from the aqueous phase using a centrifuge at 4,000 rpm for 20 minutes. The material was subsequently washed twice with demineralized water and 3 times with ethanol. The resulting material was dried in a vacuum oven at 70°C under reduced pressure for 3 hours. The resulting hydrotalcite-like clay comprising rosin-based ions was analyzed with X-ray diffraction to determine the interplanar spacing or d-spacing.

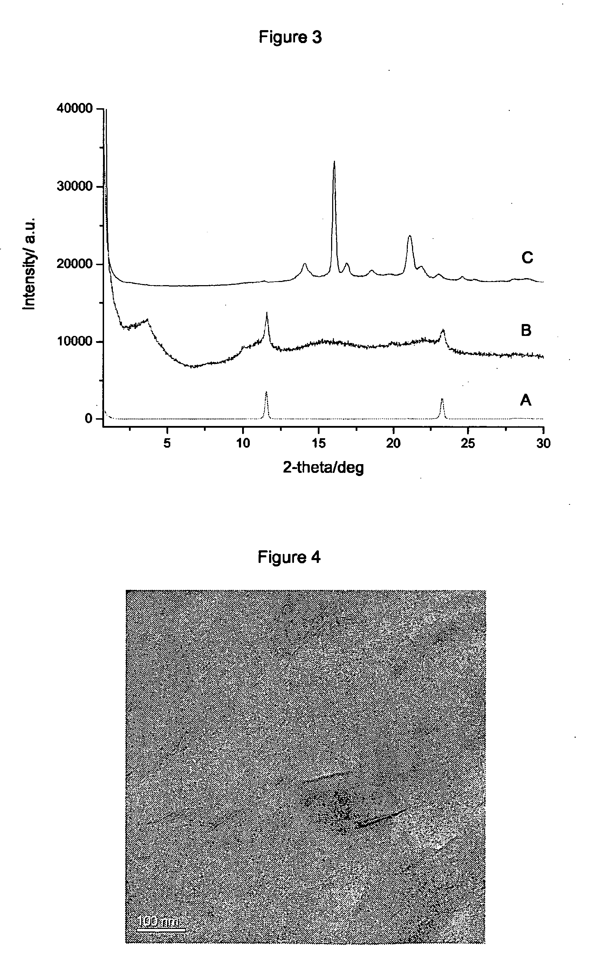

The XRD pattern of the hydrotalcite-like clay comprising disproportionated rosin-based ions (Figure 3, line B) shows minor hydrotalcite-related non-(hk0) reflections, indicating intercalation of the anionic clay. The intercalate exhibits a broad characteristic d(00I) value of 24 Å and some residual signals at 7.6 A or 8.0 Å d-spacing of the original hydrotalcite-like clay (Figure 3A) and the nitrated hydrotalcite-like clay.

Example 5

A polypropylene-based nanocomposite was prepared by melt-mixing the hydrotalcite-like clay comprising rosin-based ions from Example 4 with polypropylene (Stamylan™ P 17M10, from DSM) in a 12/88 weight ratio using a 5 cc micro-extruder. Approximately 3.2 grams of PP were mixed with 0.4 grams of intercalated clay at a rotation speed of 200 rpm at a temperature of 200°C for 60 minutes and then cooled to 170°C and mixed for an additional 25 minutes. The nanocomposite was analyzed with XRD and TEM to determine the extent of exfoliation.

The PP nanocomposite (Figure 3, line C) shows no reflections at a d-spacing of 24 Å, which confirms that the organoclay is exfoliated. The formation of a nanocomposite material is further confirmed by the TEM images (Figure 4) and by the fact that the polypropylene-based nanocomposite obtained became almost transparent during the mixing process.

**Claims**

1. Clay selected from anionic clays, smectite-type clays, and vermiculite comprising charge-balancing organic ions wherein at least part of the organic ions is rosin-based.

2. A clay according to claim 1 wherein the clay is an anionic clay.

3. A clay according to claim 1 wherein the clay is a smectite-type clay selected from the group consisting of montmorillonite, beidelite, nontronite, hectorite, saponite, and sauconite.

4. A clay according to any one of the preceding claims wherein at least 10 wt% of the total of charge-balancing ions is rosin-based.

5. Hybrid organic-inorganic composite material comprising the clay according to any one of the preceding claims in a polymer matrix.

6. A composite material according to claim 5 wherein the polymeric matrix comprises a (co)polymer obtainable by polymerization of at least one ethylenically unsaturated monomer.

7. A composite material according to claim 6 wherein the polymer is polyethylene or polypropylene.

8. A composite material according to any one of claims 5-7 wherein the rosin-based ions are substituted with substituted or unsubstituted aliphatic or aromatic hydrocarbons having 1 to 40 carbon atoms.

9. A composite material according to any one of claims 5-7 wherein the rosin-based ions comprise a reactive group selected from the group consisting of hydroxy, amino, ammonium, nitro, sulfonic, sulfinic, sulfonate, sulfonium, phosphonate, phosphonium, epoxy, vinyl, isocyanate, carboxy, carboxylic acid, hydroxyphenyl, and anhydride.

10. A composite material according to any one of claims 5-9 wherein the clay further comprises one or more organic ions different from the rosin-based ion.

11. A composite material according to any one of claims 5-10 comprising 1-10 wt% of the clay, based on the total weight of the composite material.

12. A composite material according to any one of claims 5-11 wherein at least part of the clay is delaminated or exfoliated.

13. A composite material according to any one of claims 5-12 wherein the composite material is a nanocomposite material.

14. A composite material according to any one of claims 5-10 comprising 10-70 wt% of the clay, based on the total weight of the composite material.

15. Use of a clay according to any one of the claims 1-4 in a coating composition, ink formulation, adhesive tackifier, resin-based composition, rubber composition, cleaning formulation, drilling fluid, cement, plaster formulation, non-woven fabric, foam, membrane, orthoplastic cast, ceramic material, polymerization reaction, paper, detergent, controlled release application for medicines, pesticides, and/or fertilizers, or sorbent of organic compounds.

16. Use of a composite material according to any one of claims 5-14 in carpeting, automobile parts, container closures, lunch boxes, closures, medical devices, household articles, food containers, dishwashers, outdoor furniture, blow-moulded bottles, disposable non-woven fabrics, cables and wires, or packaging.

**Patentansprüche**

1. Ton, ausgewählt aus anionischen Tonen, Tonen vom Smektit-Typ und Vermiculit, umfassend ladungsausgleichende organische Ionen, wobei wenigstens ein Teil der organischen Ionen auf Colophonium basiert.

2. Ton nach Anspruch 1, wobei der Ton ein anionischer Ton ist.

3. Ton nach Anspruch 1, wobei der Ton ein Ton vom Smektit-Typ ist, der aus der aus Montmorillonit, Beidelit, Nontronit, Hektorit, Saponit und Sauconit bestehenden Gruppe ausgewählt ist.

4. Ton nach einem der vorhergehenden Ansprüche, wobei wenigstens 10 Gew.-% der Gesamtmenge der ladungsausgleichenden Ionen auf Colophonium basieren.

5. Organisch-anorganisches Hybrid-Kompositmaterial, umfassend den Ton nach einem der vorhergehenden Ansprüche in einer Polymermatrix.

**6.** Kompositmaterial nach Anspruch 5, wobei die Polymermatrix ein (Co)Polymer umfasst, das durch die Polymerisation wenigstens eines ethylenisch ungesättigten Monomers erhältlich ist.

**7.** Kompositmaterial nach Anspruch 6, wobei das Polymer Polyethylen oder Polypropylen ist.

**8.** Kompositmaterial nach einem der Ansprüche 5 - 7, wobei die Ionen auf Colophoniumbasis mit substituierten oder unsubstituierten aliphatischen oder aromatischen Kohlenwasserstoffen mit 1 bis 40 Kohlenstoffatomen substituiert sind.

**9.** Kompositmaterial nach einem der Ansprüche 5 - 7, wobei die Ionen auf Colophoniumbasis eine reaktive Gruppe umfassen, die aus der aus Hydroxy, Amino, Ammonium, Nitro, Sulfon, Sulfin, Sulfonat, Sulfonium, Phosphonat, Phosphonium, Epoxy, Vinyl, Isocyanat, Carboxy, Carbonsäure, Hydroxyphenyl und Anhydrid bestehenden Gruppe ausgewählt ist.

**10.** Kompositmaterial nach einem der Ansprüche 5 - 9, wobei der Ton weiterhin ein oder mehrere organische Ionen umfasst, die vom Ion auf Colophoniumbasis verschieden sind.

**11.** Kompositmaterial nach einem der Ansprüche 5 - 10, umfassend 1 - 10 Gew.-% des Tons, bezogen auf das Gesamtgewicht des Kompositmaterials.

**12.** Kompositmaterial nach einem der Ansprüche 5 - 11, wobei wenigstens ein Teil des Tons delaminiert oder abgeblättert ist.

**13.** Kompositmaterial nach einem der Ansprüche 5 - 12, wobei das Kompositmaterial ein Nanokompositmaterial ist.

**14.** Kompositmaterial nach einem der Ansprüche 5 - 10, umfassend 10 - 70 Gew.-% des Tons, bezogen auf das Gesamtgewicht des Kompositmaterials.

**15.** Verwendung eines Tons nach einem der Ansprüche 1 - 4 in einer Beschichtungszusammensetzung, einer Tintenformulierung, einem Klebstoff-Klebrigmacher, einer Zusammensetzung auf Harzbasis, einer Kautschukzusammensetzung, einer Reinigungsformulierung, einer Bohrflüssigkeit, einem Zement, einer Putzformulierung, einem Vliesstoff, einem Schaumstoff, einer Membran, einem orthoplastischen Guss, einem Keramikmaterial, einer Polymerisationsreaktion, einem Papier, einem Reinigungsmittel, einer Anwendung mit geregelter Freisetzung für Medikamente, Pestizide und/oder Düngemittel oder einem Sorbens von organischen Verbindungen.

**16.** Verwendung eines Kompositmaterials nach einem der Ansprüche 5 - 14 in Teppichstoff, Kraftfahrzeugteilen, Behälterverschlüssen, Brotbüchsen, Verschlüssen, medizinischen Vorrichtungen, Haushaltsgegenständen, Lebensmittelbehältern, Geschirrspülmaschinen, Möbeln für den Außenbereich, blasgeformten Flaschen, Einweg-Vliesstoffen, Kabeln und Drähten oder Verpackungen.

**Revendications**

**1.** Argile choisie parmi les argiles anioniques, les argiles de type smectite, et la vermiculite comprenant des ions organiques à équilibrage de charge, dans laquelle au moins une partie des ions organiques est à base de colophane.

**2.** Argile selon la revendication 1, dans laquelle l'argile est une argile anionique.

**3.** Argile selon la revendication 1, dans laquelle l'argile est une argile de type smectite choisie dans le groupe constituée par la montmorillonite, la béidélite, la nontronite, l'hectorite, la saponite, et la sauconite.

**4.** Argile selon l'une quelconque des revendications précédentes, dans laquelle au moins 10 % en poids du total des ions à équilibrage de charge sont à base de colophane.

**5.** Matériau composite organique-inorganique hybride comprenant l'argile selon l'une quelconque des revendications précédentes dans une matrice polymère.

**6.** Matériau composite selon la revendication 5, dans lequel la matrice polymère comprend un (co)polymère pouvant être obtenu par polymérisation d'au moins un monomère éthyléniquement insaturé.

7. Matériau composite selon la revendication 6, dans lequel le polymère est le polyéthylène ou le polypropylène.

8. Matériau composite selon l'une quelconque des revendications 5 à 7, dans lequel les ions à base de colophane sont substitués par des hydrocarbures aliphatiques ou aromatiques substitués ou non substitués ayant de 1 à 40 atomes de carbone.

9. Matériau composite selon l'une quelconque des revendications 5 à 7, dans lequel les ions à base de colophane comprennent un groupe réactif choisi dans le groupe constitué par les groupes hydroxy, amino, ammonium, nitro, sulfonique, sulfinique, sulfonate, sulfonium, phosphonate, phosphonium, époxy, vinyle, isocyanate, carboxy, acide carboxylique, hydroxyphényle, et anhydride.

10. Matériau composite selon l'une quelconque des revendications 5 à 9, dans lequel l'argile comprend en outre un ou plusieurs ions organiques autres que l'ion à base de colophane.

11. Matériau composite selon l'une quelconque des revendications 5 à 10, comprenant de 1 à 10 % en poids de l'argile, par rapport au poids total du matériau composite.

12. Matériau composite selon l'une quelconque des revendications 5 à 11, dans lequel au moins une partie de l'argile est délaminée ou exfoliée.

13. Matériau composite selon l'une quelconque des revendications 5 à 12, dans lequel le matériau composite est un matériau nanocomposite.

14. Matériau composite selon l'une quelconque des revendications 5 à 10, comprenant de 10 à 70 % en poids de l'argile, par rapport au poids total du matériau composite.

15. Utilisation d'une argile selon l'une quelconque des revendications 1 à 4 dans une composition de revêtement, une formulation d'encre, un agent collant, une composition à base de résine, une composition de caoutchouc, une formulation nettoyante, une boue de forage, un ciment, une formulation de plâtre, un tissu non tissé, une mousse, une membrane, une matière coulée orthoplastique, une céramique, une réaction de polymérisation, un papier, un détergent, une application à libération contrôlée pour le domaine médical, des pesticides et/ou des fertilisants, ou un agent absorbant de composés organiques.

16. Utilisation d'un matériau composite selon l'une quelconque des revendications 5 à 14 dans les moquettes, les parties automobiles, les fermetures de récipients, les boîtes à pique-nique, les fermetures, les appareils médicaux, les articles ménagers, les récipients pour aliments, les lave-vaisselles, les meubles de jardin, les bouteilles soufflées, les tissus non tissés jetables, les câbles et les fils, ou les emballages.

Figure 1

Figure 2

## Figure 3

## Figure 4

## REFERENCES CITED IN THE DESCRIPTION

**Patent documents cited in the description**

- WO 9935186 A
- WO 0009599 A
- EP 0780340 A
- US 4695402 A
- US 3855147 A
- US 3852405 A
- US 3844979 A
- US 3844978 A
- US 3671190 A
- US 3666407 A
- US 3586478 A
- US 3252757 A
- US 2510295 A
- US 2686776 A
- US 2623870 A

**Non-patent literature cited in the description**

- **CAVANI et al.** *Catalysis Today,* 1991, vol. 11, 173-301
- **BOOKIN et al.** *Clays and Clay Minerals,* 1993, vol. 41 (5), 558-564
- **WANG HENGSHAN ; TANG LIDONG ; PAN YINGMING ; LIANG MIN.** Synthesis of Novel Chiral Quaternary Ammonium Salt from Rosin. *Chemical Journal on Internet,* 01 August 2004, vol. 6 (8), 56
- **D.F. ZINKEL ; J. RUSSELL.** Naval Stores, production-chemistry-utilization. 1989, vol. II
- **J.B. CLASS.** Resins, Natural,'' Chapter 1: ''Rosin and Modified Rosins. *Kirk-Othmer Encyclopedia of Chemical Technology,* 04 December 2000
- **CARLINO.** *Solid State Ionics,* 1996, vol. 98, 73-84
- **P.J. FLORY.** Principles of Polymer Chemistry. 1953
- Polypropylene'', Chapter 1: ''Properties. **R.B. LIEBERMAN.** Kirk-Othmer Encyclopedia of Chemical Technology. 04 December 2000
- Polypropylene'', Chapter 2: ''Manufacture'', and Chapter 3: ''Processing. **R.B. LIEBERMAN.** Kirk-Othmer Encyclopedia of Chemical Technology. 04 December 2000
- Polypropylene'', Chapter 5: ''Uses. **R.B. LIEBERMAN.** Kirk-Othmer Encyclopedia of Chemical Technology. 04 December 2000